# EUROPEAN PATENT APPLICATION

(11) **EP 3 569 574 A1**
(43) Date of publication of application: **20.11.2019**
(21) Application number: 18756363.0
(22) Date of filing: 19.04.2018
(51) Int. Cl.: C02F 1/00

(54) **CONTROL METHOD AND SYSTEM FOR PULSE-BASED SEWAGE PURIFICATION**

(30) Priority: 27.03.2018 CN 201810258731
(71) Applicant: South-Venture (Tianjin) Technology Development Co., Ltd., Tianjin 300050 (CN)
(72) Inventor: ZHANG, Fapeng, JinNan Tianjin 300050 (CN); YU, Yifan, JinNan Tianjin 300050 (CN)
(74) Representative: Tiburzi, Andrea
(86) International application number: PCT/CN2018/083648
(87) International publication number: WO 2019/184022

(57) **Abstract**

Provided are a method and a system for controlling a pulsing purification of sewage, which relate to the technical field of sewage treatment. The method for controlling the pulsing purification of sewage is applied to the system for controlling the pulsing purification of sewage. The method includes: obtaining a current environment parameter of an adjusting tank, and controlling a water pump to operate in a heart beating manner when the current environment parameter meets a first triggering condition, so as to pump sewage from the adjusting tank into a reaction tank for treatment. The method and system for controlling the pulsing purification of sewage provided in the present disclosure can effectively improve the self-adaptability of a small-scale sewage treatment facility to extremely uneven sewage discharge, resolves the contradiction between the demand for treating small flow sewage and the difficulty in finding an electromechanical equipment with an matching capacity, and accordingly, solves the problem of "wasting one's talent on a petty job". Therefore, the power equipment can be constantly kept in a high-efficiency operation condition, significantly saving the energy.

## Description

### Cross Reference to Related Applications

The present disclosure claims priority to Chinese Patent Application (No. 2018102587314), entitled "Method and system for controlling the pulsing purification of sewage", filed with the State Intellectual Property Office (SIPO) of the People's Republic of China on March 27, 2018, the contents of which are incorporated herein by reference in its entirety.

### Technical Field

The present disclosure relates to the technical field of sewage treatment, and particularly to a method and a system for controlling pulsing purification of sewage.

### Background Art

In the design of large and medium urban sewage treatment facilities (with a treatment capacity more than 1000m³/d), the design scale is usually determined according to the average daily flow rate annually, and the overall variation coefficient is determined according to the population size. A primary treatment unit is designed according to a product of the design scale and the overall variation coefficient (the maximum flow rate), and secondary and tertiary treatment units are designed according to the design scale. Each unit operates continuously.

In the design of an industrial sewage treatment facility, in order to ensure uniform and continuous operation of the subsequent treatment units, an adjusting tank is designed at a headend of the technological process, so as to adjust discontinuous and uneven incoming water into continuous and uniform outgoing water in terms of both amount and quality, and the outgoing water is then sent to the subsequent treatment units, which ensures the continuous and stable operation of the subsequent treatment units. Only in this way can each treatment unit serve its efficient purification function.

In recent years, the construction of rural sewage treatment facilities has been vigorously developed in China, and thus it is in urgent need for small-scale, off-network sewage treatment facilities and equipment. Due to the lack of design methods and theories, the current built or developed small-scale sewage treatment facilities or equipment can only follow the design methods and theories of the large and medium urban sewage treatment facilities. However, the discharge of sewage from general small-scale sewage treatment facilities or equipment is extremely uneven. Following the design methods and theories of large and medium sewage treatment facilities will lead to a contradiction between the extremely uneven sewage discharge and the continuous and uniform operation of the treatment units, resulting in a situation known as "wasting one's talent on a petty job", and thus dramatically increasing the energy consumption of the sewage treatment facilities.

### Summary of the Disclosure

The objective of the present disclosure includes, for example, providing a method and system for controlling the pulsing purification of sewage to alleviate the above mentioned problems.

The embodiments of the present disclosure are implemented as follows.

The embodiments of the present disclosure provide a method for controlling the pulsing purification of sewage, which is used for a system for controlling pulsing purification of sewage. The method includes the steps of:
obtaining a current environment parameter of an adjusting tank; and
controlling, if the current environment parameter meets a first trigger condition, a water pump to operate in a heart beating manner, so as to pump sewage from the adjusting tank into a reaction tank for treatment.

Optionally, the current environment parameter comprises a liquid level or a sewage flow of the adjusting tank. The step of controlling if the current environment parameter meets a first trigger condition a water pump to operate in a heart beating manner includes:
controlling, if the liquid level is higher than a preset first level threshold or the sewage flow is greater than a preset first flow rate threshold, the water pump to operate in the heart beating manner.

Optionally, the method further includes a step of:
controlling, if the current environment parameter meets a second trigger condition, the water pump to be stopped.

Optionally, the step of controlling if the current environment parameter meets a second trigger condition the water pump to be stopped includes:
controlling, if the liquid level is lower than a preset second level threshold or the sewage flow is less than a preset second flow rate threshold, the water pump to be stopped;
the second level threshold is less than the first level threshold, and the second flow rate threshold is less than the first flow rate threshold.

Optionally, the method further includes a step of:
controlling, if the current environment parameter meets a third trigger condition, the water pump to operate continuously.

Optionally, the step of controlling if the current environment parameter meets a third trigger condition the water pump to operate continuously includes:
controlling, if the liquid level is higher than a preset third level threshold or the sewage flow is greater than a preset third flow rate threshold, the water pump to operate continuously;
the third level threshold is greater than the first level threshold, and the third flow rate threshold is greater than the first flow rate threshold.

Optionally, the system for controlling the pulsing purification of sewage includes a fan configured to supply oxygen to the reaction tank. The method further includes:
controlling the fan to be started along with the water pump, in the heart beating manner; and
controlling the fan to be started if the fan has stopped for a duration longer than a preset time interval.

Optionally, the system for controlling the pulsing purification of sewage includes a fan configured to supply oxygen to the reaction tank. The method further includes:
controlling the fan to be started at a predetermined time interval.

The embodiments of the present disclosure also provide a system for controlling the pulsing purification of sewage. The system for controlling the pulsing purification of sewage includes a controller, a detecting unit, and a water pump. The controller is electrically connected with each of the detecting unit and the water pump.

The detecting unit is configured to detect the current environment parameter of the adjusting tank.

The controller is configured to control, if the current environment parameter meets a first trigger condition, the water pump to operate in a heart beating manner, so as to pump the sewage from the adjusting tank into the reaction tank for treatment.

Optionally, the detecting unit is configured to detect the liquid level or the sewage flow of the adjusting tank. The controller is configured to control, if the liquid level is higher than a preset first level threshold or the sewage flow is greater than a preset first flow rate threshold, the water pump to operate in a heart beating manner.

Optionally, the controller is further configured to control, if the current environment parameter meets a second trigger condition, the water pump to be stopped.

Optionally, the controller is configured to control, if the liquid level is lower than a preset second level threshold or the sewage flow is less than a preset second flow rate threshold, the water pump to be stopped.

The second level threshold is less than the first level threshold, and the second flow rate threshold is less than the first flow rate threshold.

Optionally, the controller is further configured to control, if the current environment parameter meets a third trigger condition, the water pump to operate continuously.

Optionally, the controller is further configured to control, if the liquid level is higher than a preset third level threshold or the sewage flow is greater than a preset third flow rate threshold, the water pump to operate continuously.

The third level threshold is greater than the first level threshold, and the third flow rate threshold is greater than the first flow rate threshold.

Optionally, the system for controlling the pulsing purification of sewage further includes a fan configured to supply oxygen to the reaction tank. The fan is electrically connected with the controller.

The controller is further configured to control the fan to be started along with the water pump, in a heart beating manner, and
control, if the fan has stopped for a duration longer than a preset time interval, the fan to be started.

Optionally, the system for controlling the pulsing purification of sewage further includes a fan configured to supply oxygen to the reaction tank. The fan is electrically connected with the controller.

The controller is further configured to control the fan to be started at a predetermined time interval.

Compared with the prior art, the method for controlling the pulsing purification of sewage provided by the embodiments of the present disclosure provides advantageous effects, including for example the following.

The method for controlling the pulsing purification of sewage provided in the embodiments of the present disclosure can effectively improve the self-adaptability of small-scale sewage treatment facilities to extremely uneven sewage discharge, resolve the contradiction between the demand for treating small flow sewage and the difficulty in finding electromechanical equipment with the matching capacity, and accordingly, the problem of "wasting one's talent on a petty job" is solved. Therefore, the power equipment can be constantly kept in a high-efficiency operation condition, significantly saving the energy.

Compared with the prior art, the system for controlling the pulsing purification of sewage provided by the embodiments of the present disclosure provides advantageous effects, including for example the following.

The system for controlling the pulsing purification of sewage provided in the embodiments of the present disclosure can effectively improve the self-adaptability of small-scale sewage treatment facilities to extremely uneven sewage discharge, resolve the contradiction between the demand for treating small flow sewage and the difficulty in finding electromechanical equipment with the matching capacity, and accordingly, the problem of "wasting one's talent on a petty job" is solved. Therefore, the power equipment can be constantly kept in a high-efficiency operation condition, significantly saving the energy.

In order to make the above objectives, features and advantages of the present disclosure more obvious and understandable, preferred embodiments will be provided below and described in detail with reference to the accompanying drawings.

### Brief Description of the Drawings

In order to further elucidate the technical solutions of the embodiments of the present disclosure, the drawings required for the embodiments will be briefly described below. It should be understood that the following drawings merely illustrate certain embodiments of the present disclosure, and therefore should not be construed as limiting the scope. For those ordinarily skilled in the art, other relevant drawings can also be obtained based on these drawings without any creative work.
Fig. 1 is a schematic diagram of the functional modules of a system for controlling a pulsing purification of sewage provided by an embodiment of the present disclosure;
Fig. 2 is a schematic diagram of the functional modules of another system for controlling a pulsing purification of sewage provided by an embodiment of the present disclosure;
Fig. 3 is a flowchart of a method for controlling a pulsing purification of sewage provided by an embodiment of the present disclosure;
Fig. 4 is a flowchart of another method for controlling a pulsing purification of sewage provided by an embodiment of the present disclosure.

Reference numerals: 100 - controller; 200 - detecting unit; 300 - water pump; 400 - fan.

### Detailed Description of the Embodiments

To make the objectives, technical solutions and advantages of the embodiments of the present disclosure more clear, the technical solutions of the embodiments of the present disclosure will hereinafter be described clearly and completely, with reference to the figures of the embodiments of the present disclosure. Obviously, the described embodiments are some but not all of the embodiments of the present disclosure. Generally, the components of the embodiments of the present disclosure, which are described and illustrated in the figures herein, may be arranged and designed in various configurations.

Thus, the following detailed description of the embodiments of the present disclosure provided in the figures is not intended to limit the scope of the present disclosure as claimed, but is merely representative of the selected embodiments of the present disclosure. Based on the embodiments of the present disclosure, all other embodiments obtained by those skilled in the art without creative work shall fall within the scope of protection of the present disclosure.

It should be noted that similar reference numerals and letters refer to similar items in the following figures. Therefore, once an item is defined in one figure, it will not be further defined or explained in the following figures.

In the description of the present disclosure, it should be noted that the orientation or positional relationship, indicated by the terms like "center", "upper", "lower", "left", "right", "vertical", "horizontal", "inside" and "outside", is based on the orientation or positional relationship shown in the figures or where the product of the disclosure is conventionally placed when it is used, if appears, is merely for facilitating describing the present disclosure and for simplifying the description rather than for indicating or implicating that the indicated device or element must have a particular orientation or be constructed and operated in a particular orientation, and therefore should not be construed as limiting the present disclosure.

In addition, the terms like "first", "second", "third", if appears, are used only to distinguish one from another for description, and should not to be construed as indicating or implying relative importance.

In addition, the terms like "horizontal", "vertical", "overhanging", if appears, do not mean that the components are absolutely horizontal or overhanging, but may be slightly tilted. For example, "horizontal" merely means that the direction is more horizontal than "vertical", and it does not mean that the structure must be completely horizontal, instead, the structure can be slightly tilted.

In the description of the present disclosure, it should be further noted that the terms "dispose", "install", "couple" and "connect", if appear, should be interpreted broadly, unless otherwise explicitly stated or defined. For example, a connection could be fixed, or detachable or integral, or it may be mechanical or electrical, or it may be direct or indirect through an intermediary medium, or it could be an internal communication between two components. For those skilled in the art, the specific meanings of the above terms in the present disclosure can be understood as appropriate.

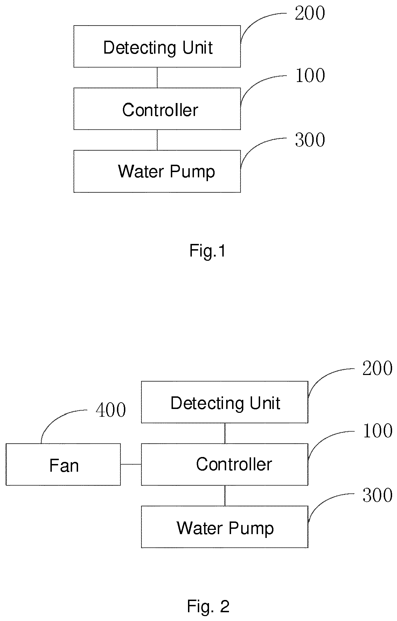

Referring to Fig. 1, Fig. 1 is a schematic diagram of the functional modules of a system for controlling a pulsing purification of sewage provided by an embodiment of the present disclosure. The system for controlling the pulsing purification of sewage is applied to a sewage treatment facility, particularly to a small-scale sewage treatment facility used for extremely uneven sewage discharge. The system for controlling the pulsing purification of sewage includes a controller 100, a detecting unit 200 and a water pump 300. The controller 100 is electrically connected with each of the detecting unit 200 and the water pump 300, so as to perform a signal interaction.

Here, the detecting unit 200 is configured to detect a current environment parameter of an adjusting tank. The sewage treatment facility is provided with an adjusting tank. The detecting unit 200 is provided within the adjusting tank and is configured to detect the current environment parameter of the adjusting tank. In the embodiments of the present disclosure, the current environment parameter may be, but not limited to, such as a liquid level or a sewage flow of the adjusting tank.

For example, if the current environment parameter is the liquid level of the adjusting tank, then the detecting unit 200 may be a liquid level sensor. If the current environment parameter is the sewage flow of the adjusting tank, then the detecting unit 200 may be a flowmeter provided at a sewage inlet of the adjusting tank. Alternatively, if the environment parameter is the weight of the sewage in the adjusting tank, then the detecting unit 200 may be a gravity sensor configured to detect the gravity of the adjusting tank.

The following is mainly a detailed description of the liquid level and the sewage flow. However, there are many practical ways, which is not to define here. It is acceptable as long as the practical way can reflect the parameters such as the amount of sewage in the adjusting tank or the treatment amount of the reaction sewage.

Once the detecting unit 200 detects the current environment parameter of the adjusting tank, the detecting unit feeds the detected current environment parameter back to the controller 100.

The controller 100 is configured to control, if the current environment parameter meets a first trigger condition, the water pump 300 to operate in a heart beating manner, so as to pump the sewage from the adjusting tank into a reaction tank for treatment.

The controller 100 has been preset with the first trigger condition which characterizes that there is sufficient sewage in the adjusting tank. Once the controller 100 obtains the current environment parameter fed back by the detecting unit 200, the controller determines whether the current environment parameter meets the preset first trigger condition. If the current environment parameter meets the first trigger condition, it indicates that there is sufficient sewage collected in the adjusting tank, at this time, the controller 100 sends a controlling signal to the water pump 300 to control the water pump 300 to operate in the heart beating manner, so that the water pump 300 pumps the sewage from the adjusting tank into the reaction tank for purification treatment.

It can be understood that the heart of a normal people beats 60 to 100 times/minute, that is to say, 60 to 100 actions are enabled per minute, which can also be understood as an intermittent work.

In an embodiment of the present disclosure, the number of the water pump 300 may be one or more. Regarding the fact that the controller 100 controls the water pump 300 to operate in the heart beating manner, it may be a situation where one water pump 300 is controlled to operate in the heart beating manner, or also it may be a situation where multiple water pumps 300 are controlled to operate in the heart beating manner simultaneously, or it may also be a situation where multiple water pumps 300 are controlled to operate in the heart beating manner in time sequence, etc., which is not specifically limited in the embodiments of the present disclosure.

In an embodiment of the present disclosure, the first trigger condition is set according to the current environment parameter. For example, if the current environment parameter is the liquid level of the adjusting tank, the first trigger condition may indicate that the liquid level of the adjusting tank is higher than a preset first level threshold. If the current environment parameter is the flow rate of the sewage in the adjusting tank, the first trigger condition may indicate that the current sewage flow of the adjusting tank is greater than a preset first flow rate threshold.

It can be understood that in other embodiments, the first trigger condition may be other trigger conditions than the above two trigger conditions, which is specifically set according to the current environment parameter.

In an embodiment of the present disclosure, the controller 100 is configured to control, if the current environment parameter meets the first trigger condition, the water pump 300 to operate in the heart beating manner. The controller may be, but not limited to, industrial control computers, PLC controllers or personal computer (PC), etc.

Optionally, the controller 100 is further configured to control, if the current environment parameter meets a second trigger condition, the water pump 300 to be stopped.

In an embodiment of the present disclosure, the controller 100 has been preset with the second trigger condition which characterizes that there is too little sewage in the adjusting tank. During the process that the controller 100 controls the water pump 300 to operate in the heart beating manner, if the current environment parameter meets the second trigger condition, then it indicates that there is too little sewage collected in the adjusting tank, in this case, the controller 100 will send a controlling signal to the water pump 300 to control the water pump 300 to be stopped.

In an embodiment of the present disclosure, the second trigger condition corresponds to the first trigger condition. For example, if the first trigger condition indicates that the liquid level of the adjusting tank is higher than the preset first level threshold, then the second trigger condition indicates that the liquid level of the adjusting tank is lower than a preset second level threshold, and the second level threshold is less than the first level threshold. If the first trigger condition indicates that the current sewage flow of the adjusting tank is higher than the preset first flow rate threshold, then the second trigger condition indicates that the current sewage flow of the adjusting tank is lower than a preset second flow rate threshold, and the second flow rate threshold is less than the first flow rate threshold.

Optionally, the controller 100 is further configured to control, if the current environment parameter meets a third trigger condition, the water pump 300 to operate continuously.

In an embodiment of the present disclosure, the controller 100 has been preset with the third trigger condition which characterizes that there is so much sewage in the adjusting tank and the sewage have gone beyond the sewage discharge capacity of the water pump 300 operated in the heart beating manner. During the course that the controller 100 controls the water pump 300 to operate in a heart beating manner, if the amount of sewage entering the sewage tank keeps exceeding the discharge capacity of the water pump 300, the third trigger condition can be triggered, at which time, the controller 100 sends a controlling signal to the water pump 300 to control the water pump 300 to operate continuously.

In an embodiment of the present disclosure, the third trigger condition corresponds to the first trigger condition. For example, if the first trigger condition indicates that the liquid level of the adjusting tank is higher than the preset first level threshold, then the third trigger condition indicates that the liquid level of the adjusting tank is higher than a preset third level threshold, and the third level threshold is higher than the first level threshold. If the first trigger condition indicates that the current sewage flow of the adjusting tank is higher than the preset first flow rate threshold, then the third trigger condition indicates that the current sewage flow of the adjusting tank is higher than a preset third flow rate threshold, and the third flow rate threshold is higher than the first flow rate threshold.

By way of the above, during the process of discharging sewage into the adjusting tank, the detecting unit 200 detects the current environment parameter of the adjusting tank in real time. As the sewage increases in the adjusting tank in the current time, the current environmental parameter meets the first trigger condition, at which time, the controller 100 controls the water pump 300 to operate in the heart beating manner, so as to pump the sewage in the adjusting tank into the reaction tank for treatment. During the process that the water pump 300 operates in the heart beating manner to pump the sewage into the reaction tank, if the water pump 300 pumps the sewage at a rate higher than the rate at which the sewage enters the adjusting tank, the amount of sewage in the adjusting tank will gradually decrease. If the current environment parameter meets the second trigger condition (where the liquid level in the adjusting tank is lower than the preset second level threshold, or the sewage flow is less than the preset second flow rate threshold), that is, there is too little sewage in the adjusting tank, then the controller 100 controls the water pump 300 to be stopped. During the process that the water pump 300 operates in the heart beating manner to pump the water from the sewage tank into the reaction tank, if the water pump 300 pumps the sewage at a rate lower than the rate at which the sewage enters the adjusting tank, the amount of sewage in the adjusting tank will still gradually increase. When the current environment parameter meets the third trigger condition (where the liquid level in the adjusting tank is higher than the preset third level threshold, or the sewage flow is larger than the preset third flow rate threshold), that is, the amount of sewage currently entering the adjusting tank has exceeded the amount of sewage discharged by the water pump 300 operated in a heart beating manner, then the controller 100 controls the water pump 300 to pump continuously. In this way, the sewage treatment capacity of small-scale sewage treatment facilities is enabled to adapt to extremely uneven sewage discharge, which improves the self-adaptability of the sewage treatment systems, resolves the contradiction between the demand for treating small flow sewage and the difficulty in finding electromechanical equipment with the matching capacity, and accordingly, reduces the energy consumption of small-scale sewage treatment facilities.

Optionally, referring to Fig. 2, the reaction tank provided in an embodiment of the present disclosure is a reaction tank for biodegrading sewage using oxygen-consuming bacteria. For example, when the reaction tank is based on Membrane Bio-Reacto (MBR), Moving Bed Biofilm Reactor (MBBR) or Sequencing Batch Reactor Activated Sludge Process (SBR), etc., the system for controlling the pulsing purification of sewage further includes a fan 400 configured to supply oxygen to the reaction tank. The fan 400 is electrically connected with the controller 100, so as to perform a signal interaction.

The controller 100 is further configured to control the fan 400 to be started along with the water pump 300 in the heart beating manner, and to control the fan 400 to be started if the fan 400 has stopped for a duration longer than a preset time interval. This further improves the self-adaptability of sewage treatment facilities, and overcomes the difficulty in protecting the microbiological system in case of lack of nutrients.

It can be understood that in some other embodiments, the controller 100 can also be configured to control the fan 400 to be started at a predetermined time interval.

If the liquid level is too high, it indicates that the system has entered the peak flow period, and the pump operates continuously and alarms.

In summary, with the system for controlling the pulsing purification of sewage provided by the embodiments of the present disclosure, in the process of discharging sewage into the adjusting tank, the controller 100 controls, if the current environment parameter meets the first trigger condition, the water pump 300 to operate in a heart beating manner, so as to pump the sewage from the adjusting tank into the reaction tank for treatment. When the current environment parameter meets the second trigger condition, the controller 100 controls the water pump 300 to be stopped. When the current environmental parameter meets the third trigger condition, the controller 100 controls the water pump 300 to pump continuously. In this way, the sewage treatment capacity of small-scale sewage treatment facilities is enabled to adapt to extremely uneven sewage discharge, which improves the self-adaptability of the sewage treatment system, resolves the contradiction between the demand for treating small flow sewage and the difficulty in finding electromechanical equipment with the matching capacity, and accordingly, the problem of "wasting one's talent on a petty job" is solved. Therefore, the power equipment can be constantly kept in a high-efficiency operation condition, significantly saving the energy. At the same time, the adaptability of the sewage treatment facility is further improved by controlling the fan 400 providing oxygen for the reaction tank, which overcomes the difficulty in protecting the microbiological system in case of lack of nutrients.

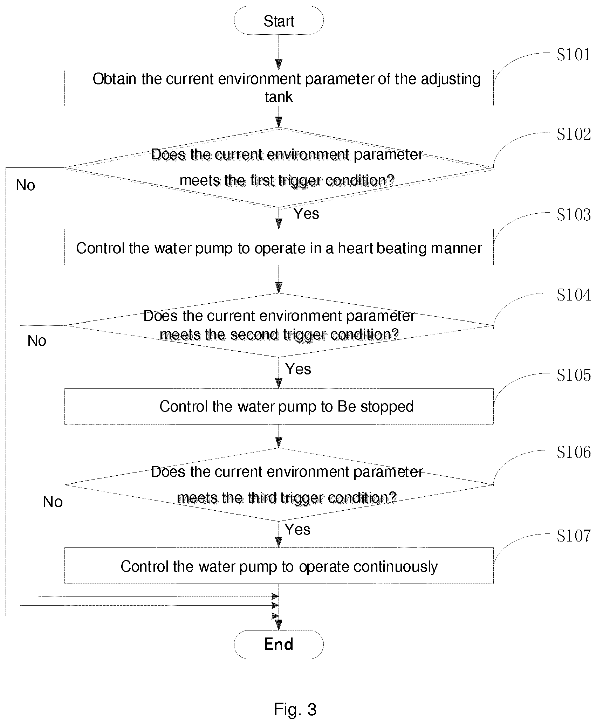

Referring to Fig. 3 which is a flowchart of the method for controlling the pulsing purification of sewage provided in an embodiment of the present disclosure. The flow shown in Fig. 3 will be described in detail below.

Step S101, obtaining the current environment parameter of the adjusting tank.

The method for controlling the pulsing purification of sewage provided in an embodiment of the present disclosure is used for the system for controlling the pulsing purification of sewage. The system for controlling the pulsing purification of sewage includes a controller 100, a detecting unit 200 and a water pump 300. The controller 100 is electrically connected with each of the detecting unit 200 and the water pump 300, so as to perform the signal interaction.

A sewage treatment facility is provided with an adjusting tank. The detecting unit 200 is provided within the adjusting tank, and the detecting unit 200 is configured to detect the current environment parameter of the adjusting tank and feed the detected current environment parameter back to the controller 100.

It can be understood that step S101 can be executed by the detecting unit 200.

Step S102, determining whether the current environment parameter meets a first trigger condition, and if the current environment parameter meets the first trigger condition, step S103 is to be executed.

The controller 100 has been preset with the first trigger condition which characterizes that there is sufficient sewage in the adjusting tank. Once obtaining the current environment parameter fed back by the detecting unit 200, the controller 100 determines whether the current environment parameter meets the preset first trigger condition, and if the current environment parameter meets the preset first trigger condition, step S103 is to be executed.

It can be understood that step S102 can be executed by the controller 100.

Step S103, controlling the water pump to operate in a heart beating manner.

If the current environment parameter meets the first trigger condition, it indicates that there is sufficient sewage collected in the adjusting tank then, at which time, a controlling signal is sent to the water pump 300 to control the water pump 300 to operate in the heart beating manner, so that the water pump 300 pumps the sewage from the adjusting tank into the reaction tank for purification.

It can be understood that step S103 can be executed by the controller 100.

Step S104, determining whether the current environment parameter meets a second trigger condition, and if the current environment parameter meets the second trigger condition, step S105 is to be executed.

The controller 100 has been preset with the second trigger condition which characterizes that there is too little the sewage in the adjusting tank. During the course that the controller 100 controls the water pump 300 to operate in the heart beating manner, the controller 100 also determines whether the current environment parameter meets the second trigger condition, and if the current environment parameter meets the second trigger condition, step S105 is to be executed.

It can be understood that step S104 can be executed by the controller 100.

Step S105, control the water pump to be stopped.

If the current environment parameter meets the second trigger condition, it indicates that there is too little sewage collected in the adjusting tank then, at which time, the controller 100 sends a controlling signal to the water pump 300 to control the water pump 300 to be stopped.

It can be understood that step S105 can be executed by the controller 100.

Step S106, determining whether the current environment parameter meets a third trigger condition, and if the current environment parameter meets the third trigger condition, step S107 is to be executed.

In an embodiment of the present disclosure, the controller 100 has been preset with the third trigger condition which characterizes that there is too much sewage in the adjusting tank, and the sewage has gone beyond the sewage discharge capacity of the water pump 300 operated in the heart beating manner. During the course that the controller 100 controls the water pump 300 to operate in the heart beating manner, the controller 100 also determines whether the current environment parameter meets the third trigger condition, and if the current environment parameter meets the third trigger condition, step S107 is to be executed.

It can be understood that step S106 can be executed by the controller 100.

It should be noted that, in the embodiments of the present disclosure, the order of step S104 and step S106 is not limited.

Step S107, controlling the water pump to operate continuously.

If the amount of sewage entering the sewage tank keeps exceeding the discharge amount of the water pump 300, the third trigger condition will be triggered, at which time, the controller 100 sends a controlling signal to the water pump 300 to control the water pump 300 to operate continuously.

It can be understood that step S107 can be executed by the controller 100.

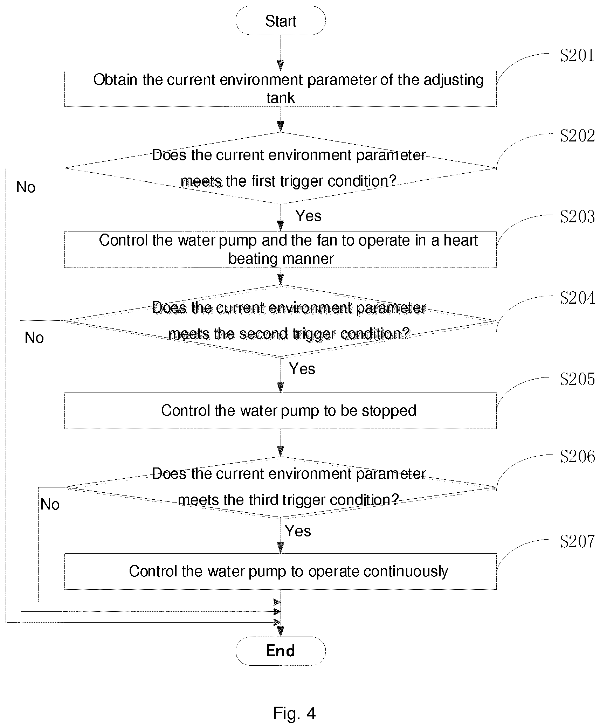

Referring to Fig. 4, which is a flowchart of another method for controlling the pulsing purification of sewage provided by an embodiment of the present disclosure. The flow shown in Fig. 4 will be described in detail below.

Step S201, obtaining the current environment parameter of the adjusting tank.

Step S202, determining whether the current environment parameter meets the first trigger condition, and if the current environment parameter meets the first trigger condition, step S203 is to be executed.

Step S203, controlling the water pump and the fan to operate in a heart beating manner.

In an embodiment of the present disclosure, the system for controlling the pulsing purification of sewage further includes a fan 400 configured to supply oxygen to the reaction tank. The fan 400 is electrically connected with the controller 100, so as to perform a signal interaction. When the current environment parameter meets the first trigger condition, while the controller 100 controls the water pump 300 to operate in the heart beating manner, the controller also controls the fan 400 to operate in the heart beating manner, so as to supply oxygen to the microorganisms in the reaction tank.

Of course, in some other embodiments, the controller 100 may also be configured to control the fan 400 to be started at a predetermined time interval.

Further, the controller 100 may also be configured to control the fan 400 to be started if the fan 400 has stopped for a duration longer than a preset time interval, which further ensures the oxygen supply for the microorganisms in the reaction tank.

Step S204, determining whether the current environment parameter meets the second trigger condition, and if the current environment parameter meets the second trigger condition, step S205 Is to be executed.

Step S205, controlling the water pump to be stopped.

Step S206, determining whether the current environment parameter meets the third trigger condition, and if the current environment parameter meets the third trigger condition, step S207 is to be executed.

Step S207, controlling the water pump to operate continuously.

In summary, with the method for controlling the pulsing purification of sewage provided by the embodiments of the present disclosure, in the process of discharging sewage into the adjusting tank, the controller 100 controls, if the current environment parameter meets the first trigger condition, the water pump 300 to operate in a heart beating manner, so as to pump the sewage from the adjusting tank into the reaction tank for treatment. When the current environment parameter meets the second trigger condition, the controller 100 controls the water pump 300 to be stopped. When the current environment parameter meets the third trigger condition, the controller 100 controls the water pump 300 to operate continuously. In this way, the sewage treatment capacity of small-scale sewage treatment facilities is enabled to adapt to extremely uneven sewage discharge, which improves the self-adaptability of the sewage treatment system, resolves the contradiction between the demand for treating small flow sewage and the difficulty in finding electromechanical equipment with the matching capacity, and accordingly, the problem of "wasting one's talent on a petty job" is solved. Therefore, the power equipment can be constantly kept in a high-efficiency operation condition, significantly saving the energy. At the same time, the adaptability of the sewage treatment facility is further improved by controlling the fan 400 providing oxygen for the reaction tank, which overcomes the difficulty in protecting the microbiological system in case of lack of nutrients.

The embodiments described above are merely the preferred ones of the present disclosure and are not intended to limit the disclosure. For those skilled in the art, the disclosure may have various modifications and changes. Any modification, equivalent replacement, or improvement made within the spirit and principle of the present disclosure shall fall within the scope of protection of the present disclosure. It should be noted that similar reference numerals and letters refer to similar items in the following figures. Therefore, once an item is defined in one figure, it will not be further defined or explained in the following figures.

The above description merely illustrates the specific embodiments of the present disclosure, but the scope of protection of the present disclosure is not limited thereto. Changes or replacements will readily occur to any one skilled in the art within the technical scope disclosed by the present disclosure, and shall fall within the scope of protection of the disclosure. Therefore, the scope of protection of the present disclosure should be subject to the scope of protection claimed by the claims.

### One Embodiment

Referring toFig. 1, the system for controlling the pulsing purification of sewage provided in this embodiment includes a controller 100, a detecting unit 200 and a water pump 300. The controller 100 is electrically connected with each of the detecting unit 200 and the water pump 300, so as to perform a signal interaction.

Here, the detecting unit 200 is configured to detect the current environment parameter of the adjusting tank.

Once the detecting unit 200 detects the current environment parameter of the adjusting tank, the detecting unit feeds the detected current environment parameter back to the controller 100.

The controller 100 is configured to control, if he current environment parameter meets the first trigger condition, the water pump to operate in a heart beating manner, so as to pump the sewage from the adjusting tank into the reaction tank for treatment; or the controller is configured to control, if the current environment parameter meets the second trigger condition, the water pump to be stopped; or the controller is configured to control, if the current environment parameter meets the third trigger condition, the water pump to pump continuously.

Referring to Fig. 2, the system for controlling the pulsing purification of sewage further includes a fan 400 configured to supply oxygen to the reaction tank. The fan 400 is electrically connected with the controller 100, so as to perform a signal interaction.

The controller 100 is further configured to control the fan 400 to be started along with the water pump 300, in the heart beating manner; and control, if the fan 400 has stopped for a duration longer than a preset time interval, the fan 400 to be started; or the controller is configured to control the fan 400 to be started at a predetermined time interval.

Referring to Fig. 3, the method for controlling the pulsing purification of sewage provided by this embodiment is used for the system for controlling the pulsing purification of sewage.

S101, obtaining the current environment parameter of the adjusting tank by detecting the current environment parameter of the adjusting tank and feeding the detected current environment parameter back to the controller 100 by the detecting unit 200.

S102, determining whether the current environment parameter meets the first trigger condition; if the current environment parameter meets the first trigger condition, S103 is to be executed and the controller 100 controls the water pump 300 to operate in a heart beating manner; otherwise, the process ends.

S104, determining whether the current environment parameter meets the second trigger condition; if the current environment parameter meets the second trigger condition, S105 is to be executed and the controller 100 controls the water pump 300 to be stopped; otherwise, the process ends.

S106, determining whether the current environment parameter meets the third trigger condition; if the current environment parameter meets the third trigger condition, S107 is to be executed and the controller 100 controls the water pump 300 to operate continuously; otherwise, the process ends.

Referring to Fig. 4, the method for controlling the pulsing purification of sewage provided in this embodiment is used for the system for controlling the pulsing purification of sewage.

S201, obtaining the current environment parameter of the adjusting tank by detecting the current environment parameter of the adjusting tank and feeding the detected current environment parameter back to the controller 100 by the detecting unit 200.

S202, determining whether the current environment parameter meets the first trigger condition; if the current environment parameter meets the first trigger condition, S203 is to be executed and the controller 100 controls the water pump 300 and the fan 400 to operate in a heart beating manner; otherwise, the process ends.

S204, determining whether the current environment parameter meets the second trigger condition; if the current environment parameter meets the second trigger condition, S205 is to be executed and the controller 100 controls the water pump 300 to be stopped; otherwise, the process ends.

S206, determining whether the current environment parameter meets the third trigger condition; if the current environment parameter meets the third trigger condition, S207 is to be executed and the controller 100 controls the water pump 300 to operate continuously; otherwise, the process ends.

### Industrial applicability

In summary, the embodiments of the present disclosure provides a method and system for controlling the pulsing purification of sewage, which can effectively improve the self-adaptability of a small-scale sewage treatment facility to extremely uneven sewage discharge, keep the power equipment in a high-efficiency operation condition constantly, and significantly saves the energy.

## Claims

1. A method for controlling pulsing purification of sewage, used for a system for controlling pulsing purification of sewage, **characterized in that** the method comprises steps of:
obtaining a current environment parameter of an adjusting tank; and
controlling, if the current environment parameter meets a first trigger condition, a water pump to operate in a heart beating manner, so as to pump sewage from the adjusting tank into a reaction tank for treatment.

2. The method for controlling pulsing purification of sewage according to claim 1, **characterized in that** the current environment parameter comprises a liquid level or a sewage flow of the adjusting tank, and the step of controlling if the current environment parameter meets a first trigger condition a water pump to operate in a heart beating manner comprises:
controlling, if the liquid level is higher than a preset first level threshold or the sewage flow is greater than a preset first flow rate threshold, the water pump to operate in the heart beating manner.

3. The method for controlling pulsing purification of sewage according to claim 2, **characterized in that** the method further comprises a step of:
controlling, if the current environment parameter meets a second trigger condition, the water pump to be stopped.

4. The method for controlling pulsing purification of sewage according to claim 3, **characterized in that** the step of controlling if the current environment parameter meets a second trigger condition the water pump to be stopped comprises:
controlling, if the liquid level is lower than a preset second level threshold or the sewage flow is less than a preset second flow rate threshold, the water pump to be stopped,
wherein the second level threshold is less than the first level threshold, and the second flow rate threshold is less than the first flow rate threshold.

5. The method for controlling pulsing purification of sewage according to claim 2, **characterized in that** the method further comprises a step of:
controlling, if the current environment parameter meets a third trigger condition, the water pump to operate continuously.

6. The method for controlling pulsing purification of sewage according to claim 5, **characterized in that** the step of controlling if the current environment parameter meets a third trigger condition the water pump to operate continuously comprises:
controlling, if the liquid level is higher than a preset third level threshold or the sewage flow is greater than a preset third flow rate threshold, the water pump to operate continuously;
wherein the third level threshold is greater than the first level threshold, and the third flow rate threshold is greater than the first flow rate threshold.

7. The method for controlling pulsing purification of sewage according to any one of claims 2 to 6, **characterized in that** the system for controlling pulsing purification of sewage comprises a fan configured to supply oxygen to the reaction tank, and the method further comprises steps of:
controlling the fan to be started, along with the water pump, in the heart beating manner; and
controlling the fan to be started if the fan has stopped for a duration longer than a preset time interval.

8. The method for controlling pulsing purification of sewage according to any one of claims 2 to 6, **characterized in that** the system for controlling pulsing purification of sewage comprises a fan configured to supply oxygen to the reaction tank, and the method further comprises a step of:
controlling the fan to be started at a predetermined time interval.

9. A system for controlling pulsing purification of sewage, **characterized in that** the system for controlling pulsing purification of sewage comprises a controller, a detecting unit and a water pump, the controller is electrically connected with each of the detecting unit and the water pump;
the detecting unit is configured to detect a current environment parameter of an adjusting tank; and
the controller is configured to control, if the current environment parameter meets a first trigger condition, the water pump to operate in a heart beating manner, so as to pump sewage from the adjusting tank into a reaction tank for treatment.

10. The system for controlling pulsing purification of sewage according to claim 9, **characterized in that** the detecting unit is configured to detect a liquid level or a sewage flow of the adjusting tank, and the controller is configured to control, if the liquid level is higher than a preset first level threshold or the sewage flow is greater than a preset first flow rate threshold, the water pump to operate in the heart beating manner.

11. The system for controlling pulsing purification of sewage according to claim 10, **characterized in that** the controller is further configured to control, if the current environment parameter meets a second trigger condition, the water pump to be stopped.

12. The system for controlling pulsing purification of sewage according to claim 11, **characterized in that** the controller is configured to control, if the liquid level is lower than a preset second level threshold or the sewage flow is less than a preset second flow rate threshold, the water pump to be stopped,
wherein the second level threshold is less than the first level threshold, and the second flow rate threshold is less than the first flow rate threshold.

13. The system for controlling pulsing purification of sewage according to claim 10, **characterized in that** the controller is further configured to control, if the current environment parameter meets a third trigger condition, the water pump to operate continuously.

14. The system for controlling pulsing purification of sewage according to claim 13, **characterized in that** the controller is further configured to control, if the liquid level is higher than a preset third level threshold or the sewage flow is greater than a preset third flow rate threshold, the water pump to operate continuously,
wherein the third level threshold is greater than the first level threshold, and the third flow rate threshold is greater than the first flow rate threshold.

15. The system for controlling pulsing purification of sewage according to any one of claims 10 to 14, **characterized by** further comprising a fan configured to supply oxygen to the reaction tank, wherein the fan is electrically connected with the controller;
the controller is further configured to control the fan to be started along with the water pump, in the heart beating manner; and control, if the fan has stopped for a duration longer than a preset time interval, the fan to be started.

16. The system for controlling pulsing purification of sewage according to any one of claims 10 to 14, **characterized by** further comprising a fan configured to supply oxygen to the reaction tank, wherein the fan is electrically connected with the controller;
the controller is further configured to control the fan to be started at a predetermined time interval.
